# EUROPÄISCHE PATENTSCHRIFT

(11) **EP 2 107 362 B1**
(45) Veröffentlichungstag und Bekanntmachung des Hinweises auf die Patenterteilung: **26.09.2012**
(21) Anmeldenummer: 09004176.5
(22) Anmeldetag: 24.03.2009
(51) Int. Cl.: G01N 21/55

(54) **Vorrichtung zur Messung der Streuung und/oder Absorption und/oder Refraktion einer Probe**
Device for measuring the dispersion and/or absorption and/or refraction of a sample
Dispositif de mesure de la dispersion et/ou de l'absorption et/ou de la réfraction d'un échantillon

(30) Priorität: 03.04.2008 DE 102008017433
(43) Veröffentlichungstag der Anmeldung: 07.10.2009
(73) Patentinhaber: Krohne Optosens, 41464 Neuss (DE)
(72) Erfinder: Mittenzwey, Klaus-Henrik, 10439 Berlin (DE); Sinn, Gert, 12045 Berlin (DE)
(74) Vertreter: Gesthuysen, Michael

(56) Entgegenhaltungen:
- DE-A1- 10 002 238
- DE-A1- 10 059 920
- DE-A1- 10 118 671
- DE-A1-102004 018 754

## Beschreibung

Die Erfindung betrifft eine Vorrichtung zur Messung der Streuung und/oder Absorption und/oder Refraktion einer Probe, mit einer Strahlenquelle, wenigstens einem Empfangselement, einem optischen Abbildungselement und einem Schutzelement, wobei die Strahlenquelle und das Empfangselement auf der Sensorseite des optischen Abbildungselements angeordnet sind, wobei das Schutzelement auf der Probenseite des Abbildungselements und benachbart zum Abbildungselement angeordnet ist und wobei die Strahlenquelle, das Abbildungselement und das Empfangselement so zueinander angeordnet sind, daß von dem Empfangselement gerichtete transmittierte und/oder specular reflektierte Probenstrahlung empfangbar ist.

Meßvorrichtungen der in Rede stehenden Art sind seit längerem bekannt und werden beispielsweise auf den Gebieten der chemischen Analytik und der Umwelt-, Qualitäts- und Prozeßüberwachung eingesetzt. Derartige Vorrichtung sind in gekapselter Form als Meßsonde bekannt, die in den zu überwachenden Prozeß eingebracht wird, genauso kann eine derartige Vorrichtung im Rahmen eines größeren Meßgeräts eingesetzt werden, das beispielsweise einen Probenraum zur Aufnahme der zu untersuchenden Probe aufweist.

Aus der DE 199 20 184 A1 ist beispielsweise eine Vorrichtung für die Erfassung von diffuser und specularer Reflexion im wesentlichen undurchsichtiger Proben bekannt, und aus der DE 10 2004 018 754 A1 ist eine Vorrichtung zur Messung der Streuung und Absorption von Proben bekannt, wobei die Untersuchung von im wesentlichen transparenten Proben im Vordergrund steht. Gemeinsam ist den Vorrichtungen jedenfalls, daß die von der Strahlenquelle emittierte Strahlung divergent auf ein Abbildungselement, beispielsweise eine Linse, fällt und von dem Abbildungselement zu einem parallelen Strahlenbündel kollimiert wird. Diese Parallelstrahlung beaufschlagt die Probe, die fest, flüssig oder auch gasförmig sein kann. Bei transparenten Proben durchdringt die Strahlung die Probe und wird von einem Spiegel wieder zurück zum Abbildungselement reflektiert, d. h. die Strahlung durchläuft die Probe zweifach. Bei einer undurchsichtigen Probe wird die emittierte Strahlung von der Probe specular reflektiert oder diffus remittiert und fällt so durch das Abbildungselement zurück in Richtung auf das Empfangselement.

Die Strahlenquelle, das Abbildungselement und das Empfangselement sind so zueinander angeordnet, daß von dem Empfangselement gerichtete transmittierte und/oder specular reflektierte Probenstrahlung empfangbar ist. Das Empfangselement wird bei den aus dem Stand der Technik bekannten Meßvorrichtungen jedoch nicht nur von der transmittierten und/oder specular reflektierten Probenstrahlung beaufschlagt, sondern auch von Streustrahlung, die von der Probe im wesentlichen ungerichtet ausgeht.

Um die von dem Empfangselement empfange Streustrahlung von der von dem Empfangselement empfangenen transmittierten und/oder specular reflektierten Probenstrahlung unterscheiden zu können, ist ein zusätzliches Streustrahlungs-Empfangselement vorgesehen, das insgesamt in der Meßvorrichtung so angeordnet ist, daß es im wesentlichen nur von der Streustrahlung beaufschlagbar ist, nicht jedoch von der transmittierten und/oder specular reflektierten Probenstrahlung beaufschlagbar ist. So kann aus der von dem Empfangselement ermittelten Gesamtstrahlung unter Berücksichtigung der von dem Streustrahlungs-Empfangselement ermittelten Streustrahlung die Höhe der transmittierten und/oder specular reflektierten Probenstrahlung ermittelt werden.

Wenn von den bekannten Vorrichtungen gleichzeitig und voneinander unterscheidbar die transmittierte und die specular reflektierte Probenstrahlung empfangbar und ermittelbar sein soll, dann ist nicht nur ein einziges Empfangselement notwendig, sondern auch ein weiteres Empfangselement, wobei dafür Sorge zu tragen ist, daß jedes der beiden Empfangselemente entweder im wesentlichen nur von der transmittierten oder im wesentlichen nur von der specular reflektierten Probenstrahlung beaufschlagbar ist, wobei - wie sich aus den vorangegangenen Ausführungen ergibt - beide Empfangselemente zusätzlich mit Streustrahlung beaufschlagt werden können.

Die DE 101 18 671 A1 offenbart ein Verfahren für die Messung der Refraktion von insbesondere mehrkomponentigen Proben. Mittels einer gemeinsamen Strahlungsquelle und einer gemeinsamen optischen Einheit bestehend aus Linse und einem prismatischen Körper werden verschiedene optische Signale erzeugt und getrennt auf optoelektronische Empfänger zur Intensitätsmessung gerichtet. Der prismatische Körper ist mit der Probe kontaktiert. Beide bilden eine gemeinsame Grenzfläche. Die Einkoppelstrahlung trifft auf die Linse, durchdringt diese und beaufschlagt den prismatischen Körper. Ein Teil der Einkoppelstrahlung trifft auf eine erste total reflektierende Grenzfläche und erreicht von dort die Grenzfläche zwischen prismatischem Körper und der Probe. In Abhängigkeit von der Refraktion der Probe wird die Strahlung von dort teilweise in Richtung einer zweiten totalreflektierenden Grenzfläche totalreflektiert. Von der zweiten totalreflektierenden Grenzfläche gelangt die Strahlung auf einen der optoelektronischen Empfänger. Die gemeinsame Strahlungsquelle und alle optoelektronischen Empfänger sind in einer Ebene in identischem Abstand vom prismatischen Körper angeordnet. Demnach zeigt die Druckschrift D2 insbesondere nicht die Merkmale des ursprünglichen Patentanspruchs 3, nämlich dass die Refraktionsstrahlenquelle zwischen der Strahlenquelle und dem Abbildungselement angeordnet ist und/oder der Refraktionsempfänger von dem Abbildungselement weiter beabstandet ist als das Empfangselement.

Bei den bekannten Vorrichtungen sind die Strahlenquelle und das Empfangselement in einer Strahlungs- und Empfangsebene angeordnet, die senkrecht zu der optischen Achse des Abbildungselements verläuft und im wesentlichen von dem Abbildungselement so weit beabstandet, wie es die Brennweite des Abbildungselements vorgibt. Unter dieser Voraussetzung läßt sich bei dem Empfangselement bzw. den Empfangselementen ein fokussiertes Bild der Strahlungsquelle erzeugen, weshalb über verschiedene optische Wege laufende Strahlung abbildungsmäßig gut voneinander trennbar ist.

Es hat sich in der Praxis jedoch herausgestellt, daß bei der Verwendung von Schutzelementen, die auf der Probenseite des Abbildungselements angeordnet sind und üblicherweise eine transparente Trennschicht zwischen dem Sensorteil der Vorrichtung und dem Probenteil der Vorrichtung bilden, Ungenauigkeiten bei der Erfassung der Streuung und/oder der Absorption und/oder der Refraktion einer Probe auftreten.

Aufgabe der vorliegenden Erfindung ist es daher, eine Vorrichtung zur Verfügung zu stellen, bei der die Meßungenauigkeiten bekannter Vorrichtung zur Messung der Streuung und/oder Absorption und/oder Refraktion einer Probe - zumindest teilweise - vermieden werden.

Erfindungsgemäß ist erkannt worden, daß bei der Erfassung von Signalen für die Refraktion der Probe - also von Signalen die auf die specular reflektierte Probenstrahlung zurückgehen - mit einem Empfänger, der insbesondere in der Strahlungs- und Empfangsebene angeordnet ist, verschiedene nachteilige Effekte auftreten.

Zum einen ist erkannt worden, daß keine scharfe Trennung der specularen Reflexe möglich ist, die einerseits von der abbildungselementseitigen Grenzfläche des Schutzelements specular reflektiert werden und die andererseits von der probenseitigen Grenzfläche des Schutzfensters specular reflektiert werden, wobei die letztgenannten Reflexe die Refraktion der Probe kennzeichnen. Die Überlagerung dieser von den beiden Grenzflächen des Schutzelements verursachten Reflexe fällt unterschiedlich stark aus, je nach dem, ob die abbildungselementseitige Grenzfläche optisch entspiegelt ist oder nicht.

Zum anderen ist erfindungsgemäß erkannt worden, daß die bekannten Vorrichtungen bei der Messung in transparenten Proben mit Spiegel dahingehend nachteilig sind, daß die transmittierte Strahlung in denselben Bereich gelenkt wird, in dem sich auch der speculare Reflex der probenseitigen Grenzfläche des Schutzelements befindet. Daher überlagert die transmittierte Strahlung das Nutzsignal der specularen Reflexion störend.

Die oben aufgezeigte Aufgabe ist erfindungsgemäß zunächst und im wesentlichen bei der in Rede stehenden Vorrichtung dadurch gelöst, daß eine Refraktionsstrahlenquelle und ein Refraktionsempfänger auf der Sensorseite des Abbildungselements und zu dem Abbildungselement so angeordnet sind, daß für den Refraktionsempfänger im wesentlichen die an der probenseitigen Grenzfläche des Schutzelements specular reflektierte Refraktionsstrahlung der Probe empfangbar ist und die an der abbildungselementseitigen Grenzfläche des Schutzelements specular reflektierte Strahlung von dem Refraktionsempfänger im wesentlichen nicht empfangbar ist, wobei die Refraktionsstrahlenquelle zwischen der Strahlenquelle und dem Abbildungselement angeordnet ist und/oder der Refraktionsempfänger von dem Abbildungselement weiter beabstandet ist als das Empfangselement. Durch die erfindungsgemäße Anordnung der Refraktionsstrahlenquelle und des Refraktionsempfängers wird sichergestellt, daß die interessierende, an der probenseitigen Grenzfläche des Schutzelements specular reflektierte Refraktionsstrahlung der Probe von der an der abbildungselementseitigen Grenzfläche des Schutzelements specular reflektierten Strahlung nicht überlagert wird, so daß die Refraktionsstrahlung der Probe selektiv ermittelbar ist. Wenn von einer "Refraktionsstrahlenquelle" und einem "Refraktionsempfänger" die Rede ist, dann ist in diesem Zusammenhang damit gemeint, daß diese Strahlenquelle und der dieser Strahlenquelle zugeordnete Empfänger für die Ermittlung der Refraktionsstrahlung der Probe gedacht sind, das bedeutet jedoch nicht, daß die Refraktionsstrahlenquelle oder der Refraktionsempfänger selbst auf dem Effekt der Refraktion beruhten oder daß dieser Effekt für die Refraktionsstrahlenquelle oder den Refraktionsempfänger selbst eine maßgebende Bedeutung hätte. Dadurch, dass die Refraktionsstrahlenquelle zwischen der Strahlenquelle und dem Abbildungselement angeordnet und zusätzlich oder alternativ der Refraktionsempfänger von dem Abbildungselement weiter beabstandet angeordnet ist als das Empfangselement wird bewirkt, dass das Signal-Rausch-Verhältnis von specular reflektierter Refraktionsstrahlung und Streustrahlung am Refraktionsempfänger erheblich verbessert ist, da die ungerichtete Streustrahlung mit dem Abstandsquadrat von dem Entstehungsort der Streustrahlung abnimmt, die gerichtete Refraktionsstrahlung diesem Entfernungsgesetz jedoch nicht unterliegt.

Bei einer bevorzugten Ausgestaltung der Erfindung ist der Abstand der Refraktionsstrahlenquelle von der optischen Achse des Abbildungselements größer als der Abstand der Strahlenquelle von der optischen Achse des Abbildungselements, wobei besonders bevorzugt der Abstand des Refraktionsempfängers von der optischen Achse des Abbildungselements größer ist als der Abstand des Empfangselements von der optischen Achse des Abbildungselements. Durch diese Maßnahme wird erreicht, daß insbesondere eine transmittierte Strahlung das Nutzsignal der specular reflektierten Refraktionsstrahlung der Probe nicht überlagert. Der Strahlengang der von der Refraktionsstrahlenquelle emittierten und der von dem Refraktionsempfänger empfangen Strahlung umläuft quasi den Strahlengang der von der Strahlenquelle emittierten und der von dem Empfangselement empfangenen transmittierten Probenstrahlung.

Bei einer weiteren bevorzugten Ausgestaltung der Erfindung emittiert die Refraktionsstrahlenquelle Strahlung wenigstens einer definierten Wellenlänge, wobei der Refraktionsempfänger insbesondere eine besondere Empfindlichkeit gegenüber der Strahlung der Refraktionsstrahlenquelle aufweist, was beispielsweise durch ein entsprechendes optisches Filter realisiert sein kann. Durch diese Ausgestaltung wird gewährleistet, daß der Refraktionsempfänger maßgeblich nur die von der Refraktionsstrahlenquelle emittierte und die an der probenseitigen Grenzfläche des Schutzelements specular reflektierte Refraktionsstrahlung der Probe empfängt, wodurch das Signal-Rausch-Verhältnis nochmals verbessert ist.

Bei einer weiteren vorteilhaften Ausgestaltung der Vorrichtung wird ein Streuempfänger vorgesehen und so angeordnet, daß der Streuempfänger im wesentlichen von der Streustrahlung der Probe beaufschlagbar ist und der Streuempfänger insbesondere und im wesentlichen nicht von der specular reflektierten Refraktionsstrahlung der Probe beaufschlagbar ist. In diesem Zusammenhang ist bei einer besonders bevorzugten Ausgestaltung der Vorrichtung vorgesehen, daß die Vorrichtung so eingerichtet ist, daß die von dem Streuempfänger empfangene und ermittelte Streustrahlung zur Kompensation der Streustrahlung verwendbar ist, die von dem Refraktionsempfänger empfangbar ist. Dies geschieht insbesondere durch Subtraktion eines gewichteten Anteils der von dem Streuempfänger empfangenen und ermittelten Streustrahlung von der von dem Refraktionsempfänger empfangenen und ermittelten Strahlung, wobei es sich hierbei um die Gesamtstrahlung handelt, die die. Streustrahlung mitumfaßt. Mit dem "gewichteten" Anteil der von dem Streuempfänger empfangenen und ermittelten Streustrahlung ist gemeint, daß die von dem Empfänger und Streuempfänger ermittelten Strahlungen und korrespondierenden Ausgangssignale aufeinander abgestimmt werden müssen, wobei z. B. unterschiedlichen Empfangsflächen, unterschiedlichen Verstärkungen und unterschiedlichen Positionen der beiden Empfänger Rechnung zu tragen ist.

Bei einer besonders vorteilhaften Ausgestaltung der Erfindung ist wenigstens ein Streuempfänger sensorseitig von und benachbart zu dem Abbildungselement angeordnet, wobei der Streuempfänger auf die Probe ausgerichtet ist und bevorzugt am äußeren Rand des Abbildungselements angeordnet ist. Ein so angeordneter Streuempfänger hat den Vorteil, daß er nicht in den gerichteten Strahlengängen liegt und so ganz automatisch nur von Streustrahlung beaufschlagt werden kann, wobei durch die unmittelbare Nähe des Streuempfängers zu dem Abbildungselement eine geringstmögliche Schwächung der Streustrahlung vorliegt, da der Abstand des Streuempfängers zu dem Ort der Entstehung der Streustrahlung nahezu kleinstmöglich gewählt ist.

Im einzelnen gibt es nun eine Vielzahl von Möglichkeiten, die erfindungsgemäße Vorrichtung auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: ein erstes Ausführungsbeispiel einer erfindungsgemäßen Vorrichtung zur synchronen Messung der Streuung und/oder Absorption und/oder Refraktion einer Probe und
- Fig. 2: ein weiteres, ergänztes Ausfühnmgsbeispiel, basierend auf der Vorrichtung nach Fig. 1.

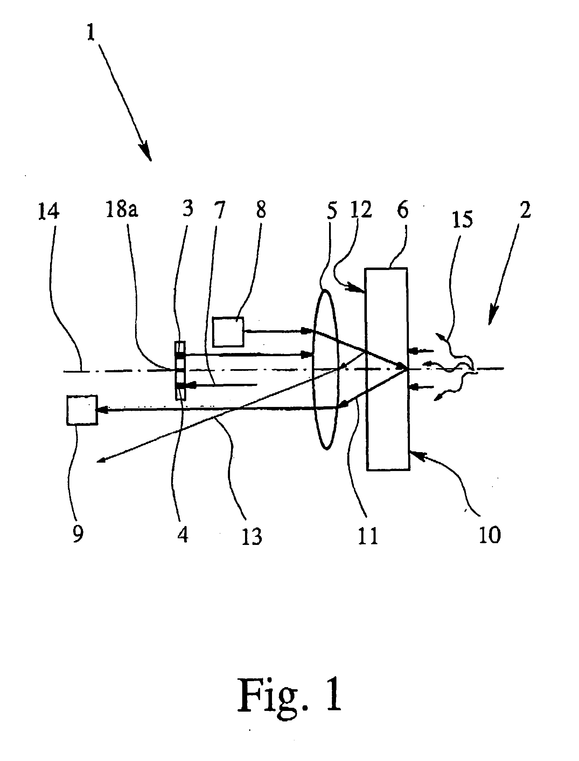

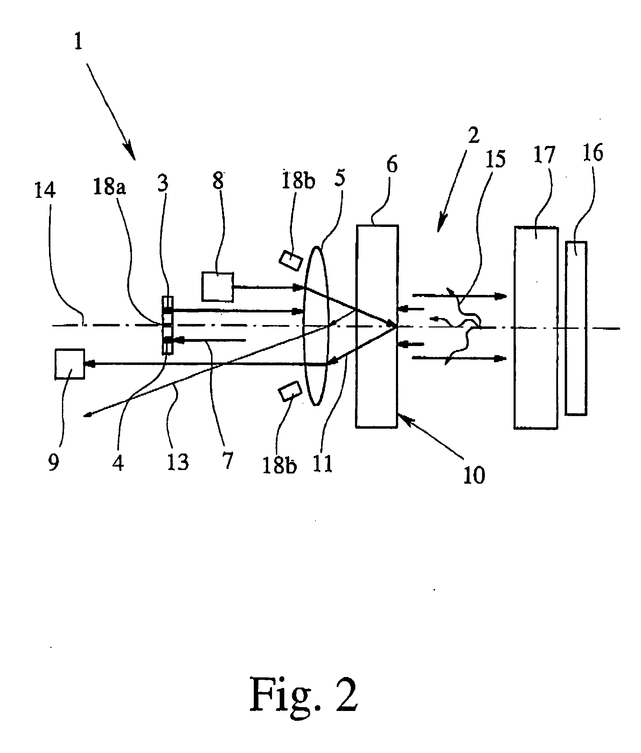

Die Fig. 1 und 2 zeigen jeweils ein Ausführungsbeispiel einer erfindungsgemäßen Meßvorrichtung 1 zur Messung der Streuung und/oder Absorption und/oder Refraktion einer Probe 2. Die Vorrichtung weist eine Strahlenquelle 3, ein Empfangselement 4, ein optisches Abbildungselement 5 in Form einer Linse und ein Schutzelement 6 auf. Die Strahlenquelle 3 und das Empfangselement 4 sind auf der Sensorseite des optischen Abbildungselements 5 angeordnet, und das Schutzelement 6 ist auf der Probenseite des Abbildungselements 5 und benachbart zum Abbildungselement 5 angeordnet. Das Schutzelement 6 schützt die Vorrichtung 1 davor, daß die Probe 2 in den sensorseitigen Teil der Vorrichtung 1 eindringt, also in jenen Teil der Vorrichtung, der auch die Strahlenquelle 3, das Empfangselement 4 und das optische Abbildungselement 5 umfaßt. Die Strahlenquelle 3, das Abbildungselement 5 und das Empfangselement 4 sind insgesamt so zueinander angeordnet, daß von dem Empfangselement 4 gerichtete transmittierte Probenstrahlung 7 empfangbar ist.

Ferner ist bei den Vorrichtungen 1 gemäß den Fig. 1 und 2 eine Refraktionsstrahlenquelle 8 und ein Refraktionsempfänger 9 auf der Sensorseite des Abbildungselements 5 und zu dem Abbildungselement 5 so angeordnet, daß für den Refraktionsempfänger 9 im wesentlichen die an der probenseitigen Grenzfläche 10 des Schutzelements 6 specular reflektierte Refraktionsstrahlung 11 der Probe 2 empfangbar ist und die an der abbildungselementseitigen Grenzfläche 12 des Schutzelements 6 specular reflektierte Strahlung 13 von dem Refraktionsempfänger 9 im wesentlichen nicht empfangbar ist. Durch diese Ausgestaltung der Meßvorrichtung ist es möglich, eine scharfe Trennung zwischen der an der probenseitigen Grenzfläche 10 des Schutzelements 6 specular reflektierten Refraktionsstrahlung 11 und der an der abbildungselementseitigen Grenzfläche 12 des Schutzelements 6 specular reflektierten Strahlung 13 möglich, da der Refraktionsempfänger 9 nur von der an der probenseitigen Grenzfläche 10 des Schutzelements 6 specular reflektierten Refraktionsstrahlung 11 der Probe 2 beaufschlagbar ist und im Betriebsfall nur von dieser Strahlung beaufschlagt wird. Vorteilhaft ist bei den dargestellten Vorrichtungen 1, daß auf eine Entspiegelung des Schutzelements 11, insbesondere auf eine Entspiegelung der abbildungselementseitigen Grenzfläche 12 des Schutzelements 6 verzichtet werden kann, was Kostenvorteile mit sich bringt.

Bei den dargestellten Ausführungsbeispielen ist der Abstand der Refraktionsstrahlenquelle 8 von der optischen Achse 14 des Abbildungselements 5 größer als der Abstand der Strahlenquelle 3 von der optischen Achse 14 des Abbildungselements 5, und der Abstand des Refraktionsempfängers 9 von der optischen Achse 14 des Abbildungselements 5 ist größer als der Abstand des Empfangselements 4 von der optischen Achse 14 des Abbildungselements 5. Dadurch wird erreicht, daß der Strahlengang der von der Refraktionsstrahlenquelle 8 emittierten und an der probenseitigen Grenzfläche 10 des Schutzelements 6 specular reflektierten Refraktionsstrahlung 11 zu großen Teilen außerhalb des Strahlengangs der von der Strahlenquelle 3 emittierten und der durch die Probe 2 transmittierten Probenstrahlung 7 verläuft, so daß der Refraktionsempfänger 9 insbesondere nicht von der transmittierten Probenstrahlung 7 beaufschlagt ist.

Vorteilhaft bei den dargestellten Ausführungsbeispielen ist ebenfalls, daß die Refraktionsstrahlenquelle 8 zwischen der Strahlenquelle 3 und dem Abbildungselement 5 angeordnet ist, also eine relative Nähe zu der Probe 2 aufweist mit entsprechend hoher erzielbarer Einstrahlungsintensität in die Probe 2. Ebenfalls vorteilhaft ist, daß der Refraktionsempfänger 9 von dem Abbildungselement 5 weiter beabstandet ist als das Empfangselement 4. Dadurch wird erreicht, daß eine den Refraktionsempfänger 9 möglicherweise ebenfalls beaufschlagende Streustrahlung 15 der Probe 2 nur mit einer sehr geringen Intensität aufweist, da die ungerichtete Streustrahlung 15 mit dem Abstandsquadrat von ihrem Entstehungsort abnimmt.

In Fig. 2 ist eine Vorrichtung 1 dargestellt, bei der probenseitig von dem Abbildungselement 5 ein Spiegel 16 so angeordnet ist, daß die von der Strahlenquelle 3 emittierte Strahlung eine transparente Probe 2 durchläuft und das Empfangselement 4 - nach Reflexion der Strahlung an dem Spiegel 16 - beaufschlagt. Eine solche Anordnung hat den Vorteil, daß die transmittierte Strahlung sensorseitig erzeugt werden kann, weshalb sich ein mögliches und hier nicht näher dargestelltes Gehäuse der Vorrichtung 1 sehr kompakt bauen läßt.

In den dargestellten Ausführungsbeispielen emittiert die Refraktionsstrablenquelle 8 Strahlung wenigstens einer definierten Wellenlänge, wobei der Refraktionsempfänger 9 eine besondere Empfindlichkeit gegenüber der Strahlung der Refraktionsstrahlenquelle 8 aufweist, was in den dargestellten Ausführungsbeispielen durch ein nicht näher dargestelltes optisches Filter realisiert ist. Durch diese Maßnahme kann zusätzlich das Signal-Rausch-Verhältnis der von der abbildungselementseitigen Grenzfläche 12 des Schutzelements 6 specular reflektierten Strahlung 13 zu der Streustrahlung 15 verbessert werden.

In den Fig. 1 und 2 ist ferner dargestellt, daß bei der Vorrichtung 1 wenigstens ein Streuempfänger 18a, 18b vorgesehen und so angeordnet ist, daß der Streuempfänger 18a, 18b im wesentlichen von der Streustrahlung 15 der Probe 2 beaufschlagbar ist, und der Streuempfänger 18a, 18b insbesondere im wesentlichen nicht von der specular reflektierten Refraktionsstrahlung 11 der Probe 2 beaufschlagbar ist. Dadurch ist es möglich, die Höhe der Streustrahlung 15 zu beurteilen, die nicht nur den Streuempfänger 18a, 18b, sondern auch das Empfangselement 4 bzw. den Refraktionsempfänger 9 beaufschlagt. Die dargestellten Ausführungsbeispiele der Vorrichtung 1 sind ferner so ausgestaltet, daß die von dem Streuempfänger 18a, 18b empfangene und ermittelte Streustrahlung 15 zur Kompensation der Streustrahlung 15 verwendet wird, die von dem Refraktionsempfänger 9 empfangbar ist. Unter "Kompensation" wird hier vor allem eine rechnerische bzw, signalmäßige Korrektur der von dem Refraktionsempfänger 9 ermittelten Strahlungsintensität verstanden, insbesondrere eine rechnerische/signalmäßige Korrektur durch Subtraktion eines gewichteten Anteils der von dem Streuempfänger 18a, 18b empfangenen und ennittelten Streustrahlung 15 von der von dem Refraktionsempfänger 9 empfangenen Gesamtstrahlung.

Als vorteilhaft hat sich erwiesen, daß der Streuempfänger 18a nahe zu oder auf der optischen Achse 14 des Abbildungselements 5 angeordnet ist, wobei in den dargestellten Ausführungsbeispielen der Streuempfänger 18a vor allem näher zu der optischen Achse 14 des Abbildungselements 5 angeordnet ist als die Strahlenquelle 3 und das Empfangselement 4. Der Streuempfänger 18a ist dabei im gleichen Abstand von dem Abbildungselement 5 angeordnet wie die Strahlenquelle 3 und das Empfangselement 4, es befindet sich also im wesentlichen auch in dem durch die Brennweite des Abbildungselements 5 definierten Abstand von dem Abbildungselement 5.

Noch vorteilhafter ist jedoch - wie in Fig. 2 dargestellt - die Anordnung des Streuempfängers 18b sensorseitig von und benachbart zu dem Abbildungselement 5, wobei der Streuempfänger 18b auf die Probe 2 ausgerichtet und am äußeren Rand des Abbildungselements angeordnet ist. Durch die relative Nähe des Streuempfängers 18b zu der Probe 2 ist die Streustrahlung 15 nur gering geschwächt jedenfalls deutlich weniger geschwächt als bei einer Anordnung des Streuempfängers im Bereich der Strahlenquelle 3 oder des Empfangselements 4, da die ungerichtet emittierte Streustrahlung 15 mit dem Abstandsquadrat von ihrem Entstehungsort abnimmt und an dem weiter von der Probe 2 entfernten Ort nur eine wesentlich geringere Intensität der Streustrahlung 15 vorliegt und damit ermittelbar ist.

## Patentansprüche

1. Vorrichtung zur Messung der Streuung und/oder Absorption und/oder Refraktion einer Probe (2), mit einer Strahlenquelle (3), wenigstens einem Empfangselement (4), einem optischen Abbildungselement (5) und einem Schutzelement (6), wobei die Strahlenquelle (3) und das Empfangselement (4) auf der Sensorseite des optischen Abbildungselements (5) angeordnet sind, wobei das Schutzelement (6) auf der Probenseite des Abbildungselements (5) und benachbart zum Abbildungselement (5) angeordnet ist und wobei die Strahlenquelle (3), das Abbildungselement (5) und das Empfangselement (4) so zueinander angeordnet sind, daß von dem Empfangselement (4) gerichtete transmittierte und/oder specular reflektierte Probenstrahlung (7) empfangbar ist,
**dadurch gekennzeichnet,**
**daß** eine Refraktionsstrahlenquelle (8) und ein Refraktionsempfänger (9) auf der Sensorseite des Abbildungselements (5) und zu dem Abbildungselement (5) so angeordnet sind, daß für den Refraktionsempfänger (9) im wesentlichen die an der probenseitigen Grenzfläche (10) des Schutzelements (6) specular reflektierte Refraktionsstrahlung (11) der Probe (2) empfangbar ist und die an der abbildungselementseitigen Grenzfläche (12) des Schutzelements (6) specular reflektierte Strahlung (13) von dem Refraktionsempfänger (9) im wesentlichen nicht empfangbar ist, wobei die Refraktionsstrahlenquelle (8) zwischen der Strahlenquelle (3) und dem Abbildungselement (5) angeordnet ist und/oder der Refraktionsempfänger (9) von dem Abbildungselement (5) weiter beabstandet ist als das Empfangselement (4).

2. Vorrichtung nach Anspruch 1, **dadurch gekennzeichnet, daß** der Abstand der Refraktionsstrahlenquelle (8) von der optischen Achse (14) des Abbildungselements (5) größer ist als der Abstand der Strahlenquelle (3) von der optischen Achse (14) des Abbildungselements (5) und/oder daß der Abstand des Refraktionsempfängers (9) von der optischen Achse (14) des Abbildungselements (5) größer ist als der Abstand des Empfangeselements (4) von der optischen Achse (14) des Abbildungselements (5).

3. Vorrichtung nach Anspruch 1 oder 2, **dadurch gekennzeichnet, daß** probenseitig von dem Abbildungselement (5) ein Spiegel (16) so angeordnet ist, daß die von der Strahlenquelle (3) emittierte Strahlung eine - zumindest teilweise - transparente Probe (2) durchläuft und das Empfangselement (4) beaufschlagt.

4. Vorrichtung nach einem der Anspruche 1 bis 5, **dadurch gekennzeichnet, daß** die Refraktionsstrahlenquelle (8) Strahlung wenigstens einer definierten Wellenlänge emittiert, insbesondere wobei der Refraktionsempfänger (9) eine besondere Empfindlichkeit gegenüber der Strahlung der Refraktionsstrahlenquelle (8) aufweist, wobei der Refraktionsempfänger (9) insbesondere ein optisches Filter aufweist.

5. Vorrichtung nach einem der Ansprüche 1 bis 4, **dadurch gekennzeichnet, daß** wenigstens ein Streuempfänger (18a, 18b) vorgesehen und so angeordnet ist, daß der Streuempfänger (18a, 18b) im wesentlichen von der Streustrahlung (15) der Probe (2) beaufschlagbar ist und der Streuempfänger (18a, 18b) insbesondere im wesentlichen nicht von der specular reflektierten Refraktionsstrahlung (11) der Probe (2) beaufschlagbar ist.

6. Vorrichtung nach Anspruch 5, **dadurch gekennzeichnet, daß** die von dem wenigstens einen Streuempfänger (18a, 18b) empfangene und ermittelte Streustrahlung (15) zur Kompensation der Streustrahlung (15) verwendet wird, die von dem Refraktionsempiänger (9) empfangbar ist, insbesondere durch Subtraktion eines gewichteten Anteils der von dem Streuempfänger (18a, 18b) empfangenen und ermittelten Streustrahlung (15) von der von dem Refraktionsempfänger (9) empfangenen Strahlung.

7. Vorrichtung nach Anspruch 5 oder 6, **dadurch gekennzeichnet, daß** der wenigstens eine Streuempfänger (18a) nahe zu oder auf der optischen Achse (14) des Abbildungselements (5) angeordnet ist, insbesondere näher zu der optischen Achse (14) des Abbildungselements (5) angeordnet ist als die Strahlenquelle (3) und/oder das Empfangselement (4), wobei der Streuempfänger (18a) insbesondere im wesentlichen im gleichen Abstand von dem Abbildungselement (5) angeordnet ist wie die Strahlenquelle (3) und/oder das Empfangselement (4).

8. Vorrichtung nach einem der Ansprüche 5 bis 7, **dadurch gekennzeichnet, daß** der wenigstens eine Streuempfänger (18b) sensorseitig von und benachbart zu dem Abbildungselement (5) angeordnet ist, wobei der Streuempfänger (18b) auf die Probe (2) ausgerichtet ist und vorzugsweise am äußeren Rand des Abbildungselements (5) angeordnet ist.

## Claims

1. Device for measuring diffusion and/or absorption and/or refraction of a sample (2), comprising a radiation source (3), at least one receiving element (4), an optical imaging element (5) and a protection element (6), wherein the radiation source (3) and the receiving element (4) are arranged on a sensor side of the optical imaging element (5), wherein the protection element (6) is arranged on a sample side of the imaging element (5) and adjacent to the imaging element (5), and wherein the radiation source (3), the imaging element (5) and the receiving element (4) are collectively arranged so that a directly transmitted and/or specularly reflected sample radiation (7) is/are receivable by the receiving element (4),
**characterized in**
**that** the refraction radiation source (8) and the refraction receiver (9) are arranged on the sensor side of the imaging element (5) and are arranged relative to the imaging element (5) so that refraction radiation (11) of the sample (2) specularly reflected by a sample side interface (10) of the protection element (6) can essentially be received by the refraction receiver (9), and the radiation (13) specularly reflected by an imaging element side interface (12) of the protection element (6) is essentially prevented from being received by the refraction receiver (9), wherein the refraction radiation source (8) is arranged between the radiation source (8) and the imaging element (5) and/or the refraction receiver (9) is further away from the imaging element (5) than the receiving element (4).

2. Device according to claim 1, **characterized in that** the distance of the refraction radiation source (8) from the optical axis (14) of the imaging element (5) is greater than the distance of the radiation source (3) from the optical axis (14) of the imaging element (5) and/or the distance of the refraction receiver (9) from the optical axis (14) of the imaging element (5) is greater than the distance of the receiving element (4) from the optical axis (14) of the imaging element (5).

3. Device according to claim 1 or 2, **characterized in that** a mirror (16) is arranged on the sample side of the imaging element (5) so that radiation emitted from the radiation source (3) passes at least partially through a transparent sample (2) and strikes the receiving element (4).

4. Device according to any one of claims 1 to 5, **characterized in that** the refraction radiation source (8) emits radiation at at least one defined wavelength, in particular wherein the refraction receiver (9) is particularly sensitive to radiation from the refraction radiation source (8), wherein the refraction receiver (9) in particular has an optical filter.

5. Device according to any one of claims 1 to 4, **characterized in that** at least one diffusion receiver (18a, 18b) is provided and arranged so that the diffusion receiver (18a, 18b) can essentially be struck by diffusion radiation (15) of the sample (2) and the diffusion receiver (18a, 18b) is essentially precluded from being struck by specularly reflected refraction radiation (11) of the sample (2).

6. Device according to claim 5, **characterized in that** the diffusion radiation (15) received and identified by the at least one diffusion receiver (18a, 18b) is used for compensating the diffusion radiation (15) that can be received by the refraction receiver (9), in particular by subtracting a weighted portion of diffusion radiation (15) received and identified by the diffusion receiver (18a, 18b) from the radiation received by the refraction receiver (9).

7. Device according to claim 5 or 6, **characterized in that** the at least one diffusion receiver (18a) is arranged close to or on the optical axis (14) of the imaging element (5), in particular closer to the optical axis (14) of the imaging element (5) than the radiation source (3) and/or the receiving element (4), wherein the diffusion receiver (18a) is arranged essentially at the same distance from the imaging element (5) as the radiation source (3) and/or the receiving element (4).

8. Device according to any one of claims 5 to 7, **characterized in that** the at least one diffusion receiver (18b) is arranged on the sensor side of and adjacent to the imaging element (5), wherein the diffusion receiver (18b) is directed toward the sample (2) and preferably is arranged on an outer edge of the imaging element (5).

## Revendications

1. Dispositif de mesure de la diffusion, de l'absorption et/ou de la réfraction par un échantillon (2), le dispositif présentant
une source (3) de rayonnement,
au moins un élément récepteur (4),
un élément optique (5) de formation d'image et un élément de protection (6),
la source (3) de rayonnement et l'élément récepteur (4) étant disposés sur le côté détecteur de l'élément optique (5) de formation d'image,
l'élément de protection (6) étant disposé du côté échantillon de l'élément (5) de formation d'image et au voisinage de l'élément (5) de formation d'image,
la source (3) de rayonnement,
l'élément (5) de formation d'image et l'élément récepteur (4) étant disposés les uns par rapport aux autres de telle sorte que le rayonnement (7) orienté, transmis et/ou réfléchi spéculairement par l'échantillon puisse être reçu par l'élément récepteur (4),
**caractérisé en ce que**
une source (8) de rayonnement de réfraction et un récepteur (9) de réfraction sont prévus sur le côté détecteur de l'élément (5) de formation d'image et sont disposés par rapport à l'élément (5) de formation d'image de telle sorte que le récepteur de réfraction (9) puisse recevoir essentiellement le rayonnement (11) de réfraction réfléchi spéculairement par la sonde (2) sur la surface frontière (10), située côté échantillon, de l'élément de protection (6) et que le récepteur de réfraction (9) ne puisse essentiellement pas recevoir le rayonnement (13) réfléchi spéculairement sur la surface frontière (12), située du côté de l'élément de formation d'image, de l'élément de protection (6),
**en ce que** la source (8) de rayonnement de réfraction est disposée entre la source de rayonnement (3) et l'élément (5) de formation d'image et/ou
**en ce que** le récepteur de réfraction (9) est situé à plus grande distance de l'élément (5) de formation d'image que l'élément de réception (4).

2. Dispositif selon la revendication 1, **caractérisé en ce que** la distance entre la source (8) de rayonnement de réfraction et l'axe optique (14) de l'élément (5) de formation d'image est supérieure à la distance entre la source (3) de rayonnement et l'axe optique (14) de l'élément (5) de formation d'image et/ou **en ce que** la distance entre le récepteur de réfraction (9) et l'axe optique (14) de l'élément (5) de formation d'image est supérieure à la distance entre l'élément de réception (4) et l'axe optique (14) de l'élément (5) de formation d'image.

3. Dispositif selon les revendications 1 ou 2, **caractérisé en ce qu'**un miroir (16) est disposé sur le côté échantillon de l'élément (5) de formation d'image de telle sorte que le rayonnement émis par la source (3) de rayonnement traverse une sonde (2) au moins partiellement transparente et soit incident sur l'élément de réception (4).

4. Dispositif selon l'une des revendications 1 à 5, **caractérisé en ce que** la source (8) de rayonnement de réfraction émet un rayonnement d'au moins une longueur d'onde définie, le récepteur de réfraction (9) présentant vis-à-vis du rayonnement de la source (8) de rayonnement de réfraction une sensibilité particulière et le récepteur de réfraction (9) présente en particulier un filtre optique.

5. Dispositif selon l'une des revendications 1 à 4, **caractérisé en ce qu'**au moins un récepteur de diffusion (18a, 18b) est prévu et disposé de telle sorte que le récepteur de diffusion (18a, 18b) peut recevoir essentiellement le rayonnement (15) diffusé par la sonde (2) et **en ce que** le récepteur de diffusion (18a, 18b) ne reçoit en particulier essentiellement pas le rayonnement de réfraction (11) réfléchi spéculairement par la sonde (2).

6. Dispositif selon la revendication 5, **caractérisé en ce que** le rayonnement diffus (15) reçu et détecté par le ou les récepteurs de diffusion (18a, 18b) est utilisé pour compenser le rayonnement diffus (15) qui peut être reçu par le récepteur de réfraction (9), en particulier en soustrayant du rayonnement reçu par le récepteur de réfraction (9) une partie pondérée du rayonnement diffus (15) reçu et détecté par le récepteur de diffusion (18a, 18b).

7. Dispositif selon les revendications 5 ou 6, **caractérisé en ce que** le ou les récepteurs de diffusion (18a) sont disposés à proximité de l'axe optique (14) de l'élément (5) de formation d'image ou à proximité de ce dernier et en particulier plus près de l'axe optique (14) de l'élément (5) de formation d'image que la source (3) de rayonnement et/ou l'élément de réception (4), le récepteur de diffusion (18a) étant en particulier disposé essentiellement à la même distance de l'élément (5) de formation d'image que la source de rayonnement (3) et/ou que l'élément de réception (4).

8. Dispositif selon l'une des revendications 5 à 7, **caractérisé en ce que** le ou les récepteurs de diffusion (18b) sont disposés côté détecteur de l'élément (5) de formation d'image et au voisinage de ce dernier, le récepteur de diffusion (18b) étant orienté sur l'échantillon (2) et disposé de préférence sur le bord extérieur de l'élément (5) de formation d'image.
